(19) 

Europäisches
Patentamt

European
Patent Office

Office européen
des brevets

(11) **EP 4 651 032 A1**

(12) **EUROPEAN PATENT APPLICATION**

(43) Date of publication:
**19.11.2025 Bulletin 2025/47**

(21) Application number: **24175999.2**

(22) Date of filing: **15.05.2024**

(51) International Patent Classification (IPC):
**G06N 3/08** (2023.01)  **G06N 3/082** (2023.01)

(52) Cooperative Patent Classification (CPC):
**G06N 3/08; G06N 3/045; G06N 3/082**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Huawei Technologies Co., Ltd.**
**Shenzhen, Guangdong 518129 (CN)**

(72) Inventors:
• **Andri, Renzo**
**80992 Munich (DE)**

• **Berestizshevsky, Konstantin**
**80992 Munich (DE)**
• **Cavigelli, Lukas**
**80992 Munich (DE)**
• **Mueller, Lorenz**
**80992 Munich (DE)**

(74) Representative: **Roth, Sebastian et al**
**Mitscherlich PartmbB**
**Patent- und Rechtsanwälte**
**Karlstraße 7**
**80333 München (DE)**

Remarks:
Amended claims in accordance with Rule 137(2)
EPC.

(54) **TOP-THRESHOLD ATTENTION FOR SCALABLE AND EFFICIENT ATTENTION-BASED ARTIFICIAL INTELLIGENCE (AI) MODELS**

(57) This disclosure relates to attention-based AI models, such as Transformers or Large Language Models (LLM). In particular, the disclosure provides a method of operating a trained model comprising attention operators. The method primarily comprises a simple comparison of the attention matrix elements to specially calibrated thresholds, and further using only the elements that pass the threshold for further computations. The thresholds can be calibrated according to a user-defined parameter k in an offline (1) or in an online (2) fashion, and are intended to ideally keep k selected attention elements per row. This achieves reduced computation and memory requirements of the attention operator, reduced data movement from KV cache, an ability to process longer sequences, and avoids retraining.

FIG.1

EP 4 651 032 A1

**Description**

TECHNICAL FIELD

The present disclosure relates generally to attention-based AI models, such as Transformers or Large Language Models (LLM), and in particular to various methods of operating a trained model comprising topologically ordered attention operators and to devices being configured to perform said methods.

BACKGROUND

As used herein, a transformer model or just transformer may refer to an AI algorithm that processes an input sequence of discrete elements (aka. "tokens", i.e., elementary units such as words, sub words, or image patches from which input sequences are constructed) by mainly relying on attention mechanisms to understand relationships between the tokens. Said attention mechanisms allow for a more nuanced understanding of language, capturing complex dependencies and relationships within the text.

As used herein, an attention mechanism may refer to a function or operator which receives as an input a sequence of tokens and produces an output sequence of tokens. Self-attention, a popular variant of the attention mechanism, consists of a linear mapping of the sequence of the tokens to three matrices called query, keys, and values, followed by a computation of the attention matrix containing scores at which each token may attend to each other token (all-pairs), and terminated by yet another linear projection. It is important to note that the computational and memory requirements of such an "all-pairs" computation scale quadratically with the input sequence length.

Modern LLMs are composed of sequences (or topological orderings) of tens to hundreds of transformers.

For example, an exemplary transformer model has an encoder-decoder structure, wherein the encoder and the decoder are respectively composed of N layers and wherein each layer comprises one or more so-called Multi-Head Attention functions.

Transformer-based LLMs may be trained on massive datasets to recognize, generate, translate, predict, and summarize text, thereby leveraging each transformer's ability to process sequences of tokens in parallel, thereby significantly reducing training times compared to recurrent neural network architectures.

Similar considerations apply for Vision Transformers (ViT) for processing of images in the form of sequences of patches (i.e. sub images) and internally based on sequences of transformers to perform tasks such as image classification, object detection, semantic segmentation, pose estimation and more.

A first challenge with the transformer model is its quadratic computational complexity with respect to sequence length, primarily due to the self-attention mechanism. This makes processing long sequences computationally expensive and memory-intensive, limiting the practical applicability of transformers in tasks involving very long texts.

A second challenge related to the large attention matrix is due to data-movement in the so-called generative decoding phase, wherein only one or very few new tokens are generated per round, whereas all the previously computed intermediate results are streamed from a special KV-cache. From the performance perspective, the generative decoding phase is characterized by being memory-bandwidth bound (i.e. the computational resources are waiting for the memory to provide the data) due to reading the full K and V matrices from the KV cache (reason: in the autoregressive decoding, each generated token performs computation on the entire K,V context). Note that each of these matrices has the same size. These two large matrices are required to be loaded in full only to participate in a small multiplication with a single row of the query / Q matrix, which corresponds to the newly generated token.

A third challenge also related to the attention matrix is its property wherein each token in the model only attends to a small subset of other tokens, rather than all tokens in the sequence (a.k.a. sparsity). Fixed sparsity assumes that the important attention values appear at fixed positions of the attention matrix, whereas content-based sparsity assumes more realistically that the important values of the can occur everywhere in the attention matrix, and will change from one input to another. Exploiting content-based sparsity within the attention matrix may therefore present a promising avenue for reduced computation and memory requirements of the attention matrix, reduced data movement from the KV cache, an ability to process longer sequences, and no need to retrain.

SUMMARY

It is an object to overcome the above-mentioned and other drawbacks.

The foregoing and other objects are achieved by the features of the independent claims. Further implementation forms are apparent from the dependent claims, the description and the figures.

According to a first aspect, a method of operating a trained model comprising topologically ordered attention operators $OP_{l \in \mathcal{L}}$ is provided, wherein $\mathcal{L}$ is the number of operators of the model. The method comprises: receiving a set of calibration token sequences $x_c^{cal}$; receiving a set $K_{set}$ of calibration parameters $k_i$; offline-calibrating a list of calibrated element thresholds $threshold_{OP_{l,k_i}}$, for the respective attention operator $OP_l$ of the model using the set of calibration token sequences $x_c^{cal}$ for each calibration parameter $k_i$ in the set $K_{set}$, the list of calibrated element thresholds $threshold_{OPl,ki}$ implementing a filtering of an attention matrix of the respective attention operator $OP_l$ keeping ideally $k_i$ out of the elements in each of the corresponding rows of the attention matrix; receiving an inference token sequence $x^{inf}$ and a user-defined parameter $k$ for the filtering; inferencing from the respective attention operator $OP_l$ in accordance with the inference token sequence $x^{inf}$, the list of calibrated element thresholds $threshold_{OPl,k}$ for the respective attention operator $OP_l$ and the user-defined parameter $k$; and outputting an inference result and proceeding at receiving an inference token sequence.

As used herein, a trained model may refer to an AI algorithm such as an LLM or Vision Transformer trained on massive datasets and thus being prepared for inference.

As used herein, a Large Language Model (LLM) may refer to an advanced AI algorithm trained on massive datasets to recognize, generate, translate, predict, and summarize text. As of 2024, these algorithms predominantly employ a sequence of transformer models as their basic blocks, and have billions of trainable parameters, enabling them to understand language structures and generate content accurately and rapidly.

As used herein, a Vision Transformer (ViT) may refer to an advanced AI algorithms that processes images in a form of sequences of patches (i.e. sub images) and is internally based on the transformer model to perform tasks such as image classification, object detection, semantic segmentation, pose estimation and more.

As used herein, inference may refer to a procedure of employing a trained model in order to produce an output (e.g. answering a user-specified input question).

As used herein, a topological ordering may refer to a sequence of operators, such as in computational acyclic graphs, such that the execution in that order will respect all the data dependencies (i.e. producer-consumer dependencies).

As used herein, tokens may refer to elementary units from which the input sequences are constructed. In the context of text input, a token can be a word, part of a word (sub word), or even a character - depending on the tokenization process. In the context of image processing, a token can be a patch of an image.

As used herein, a calibration token sequence may refer to a sequence of tokens being used for calibration.

As used herein, an inference token sequence may refer to a sequence of tokens being used for inference.

As used herein, a threshold may refer to a real number which may be used to compare the (attention matrix) elements to. If the element is above the threshold, it is referred to as "selected" or "kept". If the element is below the threshold, it may be referred to as "filtered" or "filtered out".

As used herein, attention may refer an operator which receives as an input a sequence of tokens, and produces an output sequence of tokens. Self-attention, a popular variant of the attention mechanism, consists of a linear mapping of the sequence of the tokens to three matrices called query, keys, and values, followed by a computation of the attention matrix containing scores at which each token may attend to each other token (all-pairs), and terminated by yet another linear projection.

As used herein, an operator may refer to a part of the computational workflow that may contain a sequence of methods, models and other operators. It has an input and returns an output.

Advantageously, content-based sparsity within the attention matrix may be exploited by inferencing in accordance with the list of calibrated element thresholds $threshold_{OPl,ki}$ which implement a filtering of the attention matrix of the respective attention operator $OP_l$ keeping ideally $k_i$ out of the elements in each of the corresponding rows of the attention matrix. This achieves reduced computation and memory requirements of the attention matrix, reduced data movement from the KV cache, an ability to process longer sequences, and avoids a need to retrain.

According to a second aspect, a method of operating a trained model comprising topologically ordered attention operators $OP_{l\in\mathcal{L}}$ is provided. The method comprises: resetting a calibration confidence; receiving an inference token sequence $x^{inf}$ and a user-defined parameter $k$ for the filtering; receiving a respective attention operator $OP_l$ of the model; comparing the calibration confidence with a minimum threshold; if the calibration confidence is higher than the minimum calibration confidence threshold, inferencing from the respective attention operator $OP_l$ in accordance with the inference token sequence $x^{inf}$, the list of calibrated element thresholds $threshold_{OPl,k}$ for the respective attention operator $OP_l$ and the user-defined parameter $k$; and if a number of kept elements of the $r^{th}$ row differs from the user-defined parameter $k$ by a minimum percentage, decreasing the calibration confidence; if the calibration confidence is lower than the minimum calibration confidence threshold and/or after every fixed number of inferences, inferencing from the respective attention operator $OP_l$ in accordance with the inference token sequence $x^{inf}$; online-calibrating a list of calibrated element thresholds $threshold_{OPl,k}$ for the respective attention operator $OP_l$ using the inference token sequence $x^{inf}$; and increasing the calibration confidence; proceeding at receiving a respective attention operator, if available; and outputting an inference result and proceeding at receiving an inference token sequence.

Advantageously, content-based sparsity within the attention matrix may be exploited as indicated above.

In a possible implementation form, inferencing from the respective attention operator $OP_l$ in accordance with the inference token sequence $x^{inf}$, the list of calibrated element thresholds $threshold_{OP_l,k}$ for the respective attention operator $OP_l$ and the user-defined parameter $k$ may comprise: computing a query matrix $Q := W^{(q)}x^{inf}$, a key matrix $K := W^{(k)}x^{inf}$ and a value matrix $V := W^{(v)}x^{inf}$ in accordance with trained parameter matrices $W^{(q)}$, $W^{(k)}$, $W^{(v)}$ of the respective attention operator $OP_l$ and the inference token sequence $x^{inf}$; computing a pre-softmax attention matrix $A := QK^T/\sqrt{d}$ in accordance with the query and key matrices $Q$, $K$ and an embedding size d; establishing if a pre-softmax or post-softmax filtering applies; in case of a pre-softmax filtering, filtering the pre-softmax attention matrix $A$ in accordance with the list of calibrated element thresholds $threshold_{OP,k}$ and the user-defined parameter $k$; computing a post-softmax attention matrix $S := RowSoftmax(A)$ by applying a softmax operation $softmax(a_r)$ to each row $a_r$ of the pre-softmax attention matrix $A$; in case of a post-softmax filtering, filtering the post-softmax attention matrix $S$ in accordance with the list of calibrated element thresholds $threshold_{OP,k}$ and the user-defined parameter $k$; loading those rows $V_{gathered}$ of the value matrix $V$ corresponding to the non-zero elements of the post-softmax attention matrix $S$; and multiplying the loaded rows $V_{gathered}$ of the value matrix $V$ and the post-softmax attention matrix $S$.

In a possible implementation form, the method may further comprise: in case of the pre-softmax filtering, renormalizing the post-softmax attention matrix $S := SDC(S)$.

In a possible implementation form, renormalizing the post-softmax attention matrix $S := SDC(S)$ may comprise: maintaining a residual pre-softmax attention matrix $A^{(res)}$ comprising only elements that were filtered out; computing a vector $m^{(res)}$ of per-row sums of elementwise exponentiated matrix $A^{(res)}$, wherein every element of $m^{(res)}$ is a sum of a respective single row of a matrix $E^{(res)}$ having elements $E_{i,j}^{(res)} = e^{A_{i,j}^{(res)}}$; computing a vector $m^{(sel)}$ of per-row sums of an elementwise exponentiated pre-softmax attention matrix $A$, wherein every element of $m^{(sel)}$ is a sum of a respective single row of a matrix $E$ having elements $E_{i,j} = e^{A_{i,j}}$, or receiving the vector $m^{(sel)}$ as an intermediate result of the previously completed computing of the post-softmax attention matrix $S := RowSoftmax(A)$; multiplying each element of each row $r$ of the post-softmax attention matrix $S$ by $m_r^{(sel)}$; and dividing each element of each row $r$ of the post-softmax attention matrix $S$ by $m_r^{(res)} + m_r^{(sel)}$.

In a possible implementation form, computing a vector $m^{(res)}$ and computing a vector $m^{(sel)}$ may respectively comprise: subtracting row-wise maximum values.

In a possible implementation form, offline-calibrating a list of calibrated element thresholds $threshold_{OP_l,k_i}$ for the respective attention operator $OP_l$ of the model using the set of calibration token sequences $x_c^{cal}$ may comprise: receiving a set $K_{set}$ of calibration parameters $k_i$ controlling a filtering of an attention matrix of the respective attention operator $OP_l$ keeping ideally $k_i$ out of the elements in each of the corresponding rows of the attention matrix; receiving a respective calibration token sequence $x^{cal}$ of the set; receiving a respective attention operator $OP_l$ of the model; computing a query matrix $Q := W^{(q)}x^{cal}$, a key matrix $K := W^{(k)}x^{cal}$ and a value matrix $V := W^{(v)}x^{cal}$ in accordance with trained parameter matrices $W^{(q)}$, $W^{(k)}$, $W^{(v)}$ of the respective attention operator $OP_l$ and the respective calibration token sequence $x^{cal}$; computing a pre-softmax attention matrix $A := QK^T/\sqrt{d}$ in accordance with the query and key matrices $Q$, $K$ and an embedding size d; establishing if a pre-softmax or post-softmax filtering applies; in case of a pre-softmax filtering, appending a $(1 - k_i/n)^{th}$ quantile of the elements of the $r^{th}$ row of the pre-softmax attention matrix $A$ to a list of recorded element thresholds $recorded\_threshold_{OP_l,k_i,r}$ for every row r of the pre-softmax attention matrix $A$ and for every parameter $k_i$ in the set $K_{set}$, wherein n is the number of elements in every row of $A$; computing a post-softmax attention matrix $S := RowSoftmax(A)$ by applying a softmax operation $softmax(a_r)$ to each row $a_r$ of the pre-softmax attention matrix $A$; in case of a post-softmax filtering, appending a $(1 - k_i/n)^{th}$ quantile of the elements of the $r^{th}$ row of the post-softmax attention matrix $S$ to a list of recorded element thresholds $recorded\_threshold_{OP_l,k_i,r}$ for every row $r$ of the post-softmax attention matrix $S$ and for every parameter $k_i$ in the set $K_{set}$, wherein n is the number of elements in every row of $S$; retrieving values and indices of the $k_i$ largest elements of every row r of a post-softmax attention matrix $S$ of the respective attention operator $OP_l$ in accordance with the calibration parameters $k_i$; proceeding at receiving a respective attention operator, if available; proceeding at receiving a respective calibration token sequence, if available; and computing the calibrated element threshold $threshold_{OPl,k,r}$ of the respective attention operator $OP_l$ in accordance with the list of recorded element thresholds $recorded\_threshold_{OPl,k,r}$ for the respective row $r$ and for the parameter $k$ comprising the respective calibration parameter $k_i$ in the set $K_{set}$.

In a possible implementation form, retrieving values and indices of the $k_i$ largest elements of every row r of an attention matrix *A* or *S* of the respective attention operator $OP_l$ in accordance with the calibration parameter $k_i$ may comprise: identifying the values and indices of the $k_i$ largest elements of every row *r* of the attention matrix A or S.

In a possible implementation form, online-calibrating a list of calibrated element thresholds $threshold_{OPl,k}$ for the respective attention operator $OP_l$ using the respective inference token sequence $x^{inf}$ may comprise: receiving a user-defined parameter *k* controlling a filtering of an attention matrix of the respective attention operator $OP_l$ keeping ideally *k* out of the elements in each of the corresponding rows of the attention matrix; receiving the list of calibrated element thresholds $threshold_{OPl,k}$ of the respective attention operator $OP_l$; receiving the list of recorded element thresholds $recorded\_thresholds_{OPl,k,r}$ of the respective attention operator $OP_l$ for each of the rows r; computing a query matrix $Q := W^{(q)}x^{cal}$, a key matrix $K := W^{(k)}x^{cal}$ and a value matrix $V := W^{(v)}x^{cal}$ in accordance with trained parameter matrices $W^{(q)}$, $W^{(k)}$, $W^{(v)}$ of the respective attention operator $OP_l$ and the respective inference token sequence $x^{inf}$; computing a pre-softmax attention matrix $A := QK^T/\sqrt{d}$ in accordance with the query and key matrices *Q,K* and an embedding size d; establishing if a pre-softmax or post-softmax filtering applies; in case of a pre-softmax filtering, appending a $(1 - k/n)^{th}$ quantile of the elements of the $r^{th}$ row of the pre-softmax attention matrix *A* to a list of recorded element thresholds $recorded\_threshold_{OPl,k,r}$ for the user-defined parameter *k* and for every row *r* of the pre-softmax attention matrix A, wherein n is the number of elements in every row of *A*; computing a post-softmax attention matrix $S := RowSoftmax(A)$ by applying a softmax operation $softmax(a_r)$ to each row $a_r$ of the pre-softmax attention matrix *A*; in case of a post-softmax filtering, appending a $(1 - k/n)^{th}$ quantile of the elements of the $r^{th}$ row of the post-softmax attention matrix *S* to the list of recorded element thresholds $recorded\_threshold_{OPl,k,r}$ for the user-defined parameter *k* and for every row *r* of the post-softmax attention matrix *S*, wherein n is the number of elements in every row of *S*; computing the calibrated element threshold $threshold_{OPl,k,r}$ of the respective attention operator $OP_l$ in accordance with the list of recorded element thresholds $recorded\_threshold_{OPl,k,r}$ for the row *r* and the parameter *k,* wherein the parameter *k* comprises the user-defined parameter *k*.

In a possible implementation form, computing the calibrated element threshold $threshold_{OPl,k,r}$ of the respective attention operator $OP_l$ in accordance with the list of recorded element thresholds $recorded\_threshold_{OPl,k,r}$ for the respective row *r* and the parameter *k* may comprise: computing a threshold from the list of recorded element thresholds $recorded\_threshol_{OPl,k,r}$; and setting the computed threshold as the calibrated element threshold $threshol_{OPl,k,r}$.

In a possible implementation form, computing a threshold from the list of recorded element thresholds $recorded\_threshold_{OPl,k,r}$ may comprise one of: selecting a maximum threshold from the list of recorded element thresholds $recorded\_threshold_{OPl,k,r}$; selecting an average threshold from the list of recorded element thresholds $recorded\_threshold_{OPl,k,r}$; and selecting one of the thresholds from the list of recorded element thresholds $recorded\_threshold_{OPl,k,r}$ according to the parameter *k* and the row *r*.

In a possible implementation form, selecting one of the thresholds from the list of recorded element thresholds $recorded\_threshold_{OPl,k,r}$ according to the parameter *k* and the row *r* may comprise: computing a numeric value $effective\_k_t$ for each of the thresholds *t* of the list of recorded element thresholds $recorded\_threshold_{OPl,k,r}$, comprising: computing a value $passx_{x,t}$ by filtering row *r* using the threshold *t* and counting a number of elements that exceed the threshold, for every token sequence *x* used in the creation of the list of recorded element thresholds $recorded\_threshold_{OPl,k,r}$; computing the numeric value $effective\_k_t$ for the threshold *t* as an arithmetic average across all $passx_{x,t}$ values of all the token sequences *x* used in the creation of the list of recorded element thresholds $recorded\_threshold_{OPl,k,r}$; and selecting one of the thresholds *t* of the list of recorded element thresholds $recorded\_threshol_{OPl,k,r}$ which minimizes a difference between its respective $effective\_k_t$ and the number *k*.

According to a third aspect, a computer program is provided, comprising a program code for performing the method of the first aspect or any of its implementations or the method of the second aspect or any of its implementations when executed on a computer.

According to a fourth aspect, a device, comprising a trained model comprising topologically ordered attention operators $OP_{l \in \mathcal{L}}$; and a processor; the device being configured to: receive a set of calibration token sequences $x_c^{cal}$; receive a set $K_{set}$ of calibration parameters $k_i$; offline-calibrate a list of calibrated element thresholds $threshold_{OP_{l,k_i}}$, for the respective attention operator $OP_l$ of the model using the set of calibration token sequences $x_c^{cal}$, for each calibration parameter $k_i$ in the set $K_{set}$, the list of calibrated element thresholds $threshold_{OP_{l,k_i}}$ implementing a filtering of an attention matrix of the respective attention operator $OP_l$ keeping ideally $k_i$ out of the elements in each of the corresponding rows of the attention matrix; receive an inference token sequence $x^{inf}$ and a user-defined parameter *k* for the filtering; infer from the respective attention operator $OP_l$ in accordance with the inference token sequence $x^{inf}$, the list of calibrated element thresholds $threshold_{OPl,k}$ for the respective attention operator $OP_l$ and the user-defined parameter *k*; and output an inference result and proceeding at receiving an inference token sequence.

In a possible implementation form, the device may be configured to perform the method of the first aspect or any of its implementations.

According to a fifth aspect, a device, comprising a trained model comprising topologically ordered attention operators $OP_{l \in \mathcal{L}}$; and a processor; the device being configured to: reset a calibration confidence; receive an inference token sequence $x^{inf}$ and a user-defined parameter $k$ for the filtering; receive a respective attention operator $OP_l$ of the model; compare the calibration confidence with a minimum calibration confidence threshold; if the calibration confidence is higher than the minimum calibration confidence threshold, infer from the respective attention operator $OP_l$ in accordance with the inference token sequence $x^{inf}$, the list of calibrated element thresholds $threshold_{OPl,k}$ for the respective attention operator $OP_l$ and the user-defined parameter $k$; and if a number of kept elements of the $r^{th}$ row differs from the user-defined parameter $k$ by a minimum percentage, decrease the calibration confidence; if the calibration confidence is lower than the minimum calibration confidence threshold and/or after every fixed number of inferences, infer from the respective attention operator $OP_l$ in accordance with the inference token sequence $x^{inf}$; online-calibrate a list of calibrated element thresholds $threshold_{OPl,k}$ for the respective attention operator $OP_l$ using the inference token sequence $x^{inf}$; and increase the calibration confidence; proceed at receiving a respective attention operator, if available; and output an inference result and proceed at receiving an inference token sequence.

In a possible implementation form, the device may be configured to perform the method of the second aspect or any of its implementations.

BRIEF DESCRIPTION OF DRAWINGS

The above-described aspects and implementations will now be explained with reference to the accompanying drawings, in which the same or similar reference numerals designate the same or similar elements.

The drawings are to be regarded as being schematic representations, and elements illustrated in the drawings are not necessarily shown to scale. Rather, the various elements are represented such that their function and general purpose become apparent to those skilled in the art.

FIG. 1      illustrates a first method of operating a trained model in accordance with the present disclosure;

FIG. 2      illustrates a second method of operating a trained model in accordance with the present disclosure;

FIGs. 3-8   illustrate various implementation details of the methods of FIGs. 1, 2 in accordance with the present disclosure;

FIG. 9      illustrates a first device in accordance with the present disclosure; and

FIG. 10     illustrates a second device in accordance with the present disclosure.

DETAILED DESCRIPTIONS OF DRAWINGS

In the following description, reference is made to the accompanying drawings, which form part of the disclosure, and which show, by way of illustration, specific aspects of implementations of the present disclosure or specific aspects in which implementations of the present disclosure may be used. It is understood that implementations of the present disclosure may be used in other aspects and comprise structural or logical changes not depicted in the figures. The following detailed description, therefore, is not to be taken in a limiting sense, and the scope of the present disclosure is defined by the appended claims.

For instance, it is understood that a disclosure in connection with a described method may also hold true for a corresponding apparatus or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary implementations and/or aspects described herein may be combined with each other, unless specifically noted otherwise.

As used herein, a transformer model or just transformer may refer to an AI algorithm that processes an input sequence of discrete elements (aka. "tokens", i.e., elementary units such as words, sub words, or image patches from which input sequences are constructed) by mainly relying on attention mechanisms to understand relationships between the tokens. Said attention mechanisms allow for a more nuanced understanding of language, capturing complex dependencies and relationships within the text.

As used herein, an attention mechanism may refer to a function or operator which receives as an input a sequence of tokens and produces an output sequence of tokens. Self-attention, a popular variant of the attention mechanism, consists of a linear mapping of the sequence of the tokens to three matrices called query, keys, and values, followed by a computation of the attention matrix containing scores at which each token may attend to each other token (all-pairs), and terminated by yet another linear projection. It is important to note that the computational and memory requirements of such an "all-pairs" computation scale quadratically with the input sequence length.

Modern LLMs are composed of sequences (or topological orderings) of tens to hundreds of transformers.

An encoder-decoder structure comprises an encoder and a decoder, wherein each may comprise an attention mechanism and position-wise feedforward networks.

As used herein, inference may refer to a procedure of employing a trained model in order to produce an output (e.g. answering a user-specified input question).

As used herein, a prefill phase of an LLM inference is the first processing of the input sequence by the model. The intermediate results of this phase are usually cached in a special Key-Value-cache (KV-cache) to speed-up the subsequent generative decoding phase. From the performance perspective, the prefill phase is known to be compute bound (i.e. memory channels are idling).

As used herein, a generative decoding phase of an LLM inference follows the prefill phase, and consists of multiple rounds. In the decoding phase, only one or very few new tokens are generated per round, whereas all the previously computed intermediate results are streamed from a special KV-cache. From the performance perspective, the generative decoding phase is characterized by being memory-bandwidth bound (i.e. the computational resources are waiting for the memory to provide the data).

As used herein, sparsity of the attention matrix may refer to the phenomenon wherein relatively few of the elements in the attention matrix are dominant, whereas the rest (majority) have very low value and also a negligible impact on the output. This effectively means that computing the self-attention using only the few dominant values will yield almost exactly the same quality of results as using the complete (dense) matrix, yet at a tremendous reduction of memory and computation requirements. Therefore, the sparsity phenomenon is at the focus of the present disclosure.

A Multi-Head Attention function or operator may be deployed in the respective attention mechanism. Further, a Scaled Dot-Product Attention function or operator may be deployed multiple times per Multi-Head Attention function.

The attention mechanism is pivotal, enabling the model to weigh the importance of different parts of the input data differently.

Perhaps the most common type of attention used in transformers is called self-attention.

In a first step of the self-attention, the trained parameter matrices $W^{(q)}$, $W^{(k)}$, $W^{(v)}$ are used to project an inference token sequence $x^{inf}$ onto three matrices: a query matrix $Q$, a key matrix $K$ and a value matrix $V$, each having a size of $n \times d$ ($n$ rows and $d$ columns), where $n$ is the sequence length and $d$ is the embedding size of each token (aka hidden dimension).

$$Q := W^{(q)} x^{inf}$$

$$K := W^{(k)} x^{inf}$$

$$V := W^{(v)} x^{inf}$$

Therein, a query matrix $Q := W^{(q)} x^{inf}$, a key matrix $K := W^{(k)} x^{inf}$ and a value matrix $V := W^{(v)} x^{inf}$ in accordance with trained parameter matrices $W^{(q)}$, $W^{(k)}$, $W^{(v)}$ of the respective attention operator $OP_l$ and the inference token sequence $x^{inf}$.

In a second step of the self-attention, a matrix P is produced via a procedure called scaled dot-product attention:

$$P = ScaledDotProductAttention(Q, K, V, d) = RowSoftmax\left(mask\left(\frac{QK^T}{\sqrt{d}}\right)\right)V$$

First computing a product of $QK^T$ matmul operation, then dividing every element of it by the square root of $d$ and applying an optional mask (causality mask which allows each token to attend only to the preceding tokens), applying a softmax operation to each individual row of the matrix, and finally multiplying it by the V matrix.

In the third and final step, after the scaled dot product is complete, a final matmul operation between the matrix P and the parameter matrix Wo is performed and the self-attention's output matrix of size $n \times d$ is returned:

$$SelfAttention(x) = PW_0$$

Note that the *RowSoftmax* operation in the scaled dot-product attention, commonly referred to as an "activation", is a row-wise operation. That is, the notation *RowSoftmax(A)* implies that each row vector a of matrix A undergoes an independent operation of *softmax(a)* as defined below to compute each of its scalar elements denoted by indices *i* (for *i* in the range of 0 to *n* - 1 inclusive):

$$softmax(\boldsymbol{a})[i] = exp(a_i - max(\boldsymbol{a}))/sum(exp(\boldsymbol{a} - max(\boldsymbol{a})))$$

where *exp(a)* is an exponentiation of the scalar *a*, and *exp(a)* is an exponentiation operation of every element of a vector *a, sum(a)* is an addition of all elements in the vector *a* which returns a single scalar, *max(a)* returns the largest among the elements of the vector *a*.

Most important is to understand that during the prefill phase, the operation *RowSoftmax(A)* within the scaled dot-product is performed on an *n* by *n* matrix A, therefore it requires performing *n* row-wise softmax operations, each of which requires the entire row of length *n*. In the generative decoding phase on the other hand, the *RowSoftmax(A)* degenerates to a single *softmax(a)* operation because the attention matrix A degenerates to an attention vector *a.*

A self-attention variant called Multi-Head-Attention (MHA) has become a well-established configuration to improve transformer's quality of results. In MHA, the single self-attention operation is split into multiple smaller concurrently computed operations (heads). Each head operates on an independent part of the hidden dimension. For example, an open-source LLM "LLaMA2-7b" splits its hidden dimension *d=4096* into 32 heads. Consequently, each head *h=1...32* computes its own set of a query matrix $Q_h$, a key matrix $K_h$ and a value matrix $V_h$ with the reduced hidden dimension $d_h$ = d/32 = 128.

Then each head follows *ScaledDotProductAttention(Q, K, V, $d_h$)* and finally the outputs of all 32 heads (each of size $n \times d_h$) are concatenated to receive the full output of the size (each of size $n \times d$). A single final output linear projection is applied.

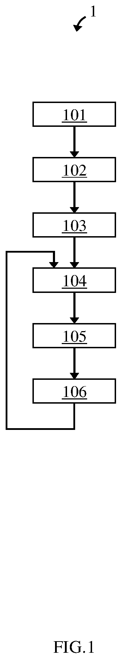

FIG. 1 illustrates a first method 1 of operating a trained model in accordance with the present disclosure.

The present disclosure is applicable in the scope of any software workflow or hardware processor which employs models that contain the attention mechanism, such as transformer-based LLMs or ViT. According to a general workflow, user-specified input sequences are inputted to the pretrained model and undergo a generative (i.e., token generating) inference procedure.

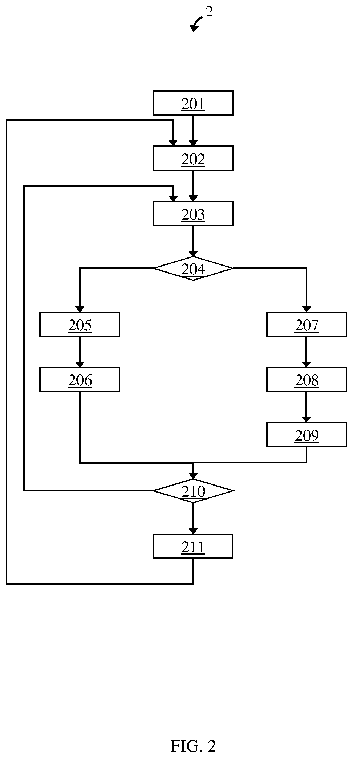

The present disclosure can be introduced to the general workflow in one of two main variants: (i) with top-threshold attention with offline calibration as depicted in FIG. 1 or (ii) top-threshold attention with online calibration as depicted in FIG. 2. Either way, the proposed method is applied to every attention operator within every attention head within every transformer layer inside the model at hand.

With reference to FIG. 1, the trained model comprises topologically ordered attention operators $OP_{l\in\mathcal{L}}$.

The method 1 comprises receiving 101 a set of calibration token sequences $x_c^{cal}$.

The method 1 further comprises receiving 102 a set $K_{set}$ of calibration parameters $k_i$.

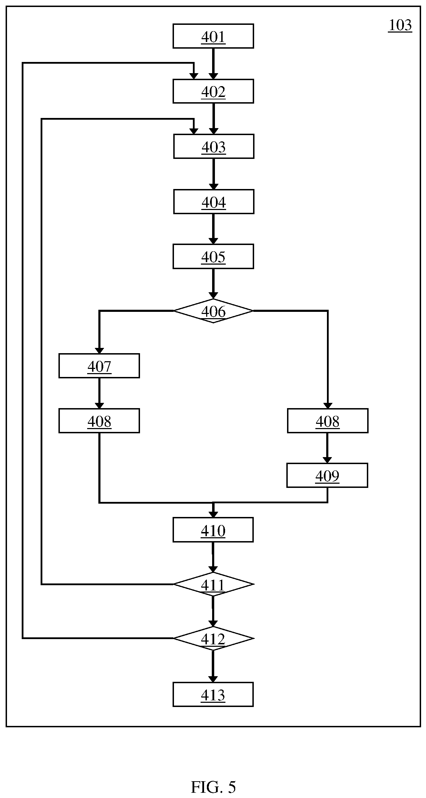

The thresholds of a model are first calibrated using Offline-Calibration($K_{set}$) method (see FIG. 5 below), where $K_{set}=\{k_1,k_2,...\}$ is a set of desired number of attention elements to limit the attention to, which may be provided by the user. The reason for having a multitude of *k* numbers is to later be able use any of these *k* values according to the required service level agreement (SLA).

The method 1 further comprises offline-calibrating 103 a list of calibrated element thresholds $threshold_{OP_{l,k_i}}$ for the respective attention operator $OP_l$ of the model using the set of calibration token sequences $x_c^{cal}$ for each calibration parameter $k_i$ in the set $K_{set}$, the list of calibrated element thresholds $threshold_{OPl,ki}$ implementing a filtering of an attention matrix of the respective attention operator $OP_l$ keeping ideally $k_i$ out of the elements in each of the corresponding rows of the attention matrix. Different elements in the list $threshold_{OP_{l,k_i}}$ may be used for filtering different rows of the attention matrix.

Once the Offline-Calibration($K_{set}$) method completes and produces the respective lists of element thresholds thresholds($K_{set}$) = {thresholds($k_1$),thresholds($k_2$),...}, the model is considered "calibrated" and ready for serving users' input requests (ready for inference). At this stage the model performs efficient inference using Thresholding(*k*) method, where user chooses the *k* out of $K_{set}$ according to their desired SLA.

The method 1 further comprises receiving 104 an inference token sequence $x^{inf}$ and a user-defined parameter *k* for the filtering.

The method 1 further comprises inferencing 105 from the respective attention operator $OP_l$ in accordance with the inference token sequence $x^{inf}$, the list of calibrated element thresholds $threshold_{OPl,k}$ for the respective attention operator $OP_l$ and the user-defined parameter $k$.

The method 1 further comprises outputting 106 an inference result and proceeding at receiving 104 an inference token sequence.

FIG. 2 illustrates a second method 2 of operating a trained model in accordance with the present disclosure.

In this variant the thresholds are calibrated on the fly, without a preliminary calibration phase.

The trained model comprises topologically ordered attention operators $OP_{l\in\mathcal{L}}$ .

The method 2 comprises resetting 201 a calibration confidence.

A special "calibration confidence score", $conf_{op}(k)$, is allocated to every attention operator $op$ in the model, and to every $k$ parameter option. This score indicates how well the thresholds of operator $op$ are calibrated for the target $k$. This score is initialized to zero for every operator and every $k$.

The method 2 further comprises receiving 202 an inference token sequence $x^{inf}$ and a user-defined parameter $k$ for the filtering.

The method 2 further comprises receiving 203 a respective attention operator $OP_l$ of the model.

The method 2 further comprises comparing 204 the calibration confidence with a minimum threshold.

The method 2 further comprises, if the calibration confidence is higher than the minimum calibration confidence threshold, inferencing 205 from the respective attention operator $OP_l$ in accordance with the inference token sequence $x^{Inf}$, the list of calibrated element thresholds $threshold_{OPl,k}$ for the respective attention operator $OP_l$ and the user-defined parameter $k$.

The method 2 further comprises, if a number of kept elements of the $r^{th}$ row differs from the user-defined parameter $k$ by a minimum percentage, decreasing 206 the calibration confidence.

So if $conf_{op}(k)$ is high enough, apply Thresholding($k$), check whether the resulting number of elements is close to $k$. If it is far from $k$: decrease $conf_{op}(k)$.

The method 2 further comprises, if the calibration confidence is lower than the minimum calibration confidence threshold and/or after every fixed number of inferences, inferencing 207 from the respective attention operator $OP_l$ in accordance with the inference token sequence $x^{inf}$.

So if $conf_{op}(k)$ is not high enough, apply baseline inference (fall back from the present method) but then run the Online-Calibration($k$) method using the input at hand (to improve the calibrated thresholds), and increase $conf_{op}(k)$.

The method 2 further comprises online-calibrating 208 a list of calibrated element thresholds $threshold_{OPl,k}$ for the respective attention operator $OP_l$ using the inference token sequence $x^{inf}$.

The method 2 further comprises increasing 209 the calibration confidence.

The method 2 further comprises proceeding 210 at receiving 203 a respective attention operator, if available.

The method 2 further comprises outputting 211 an inference result and proceeding at receiving 202 an inference token sequence.

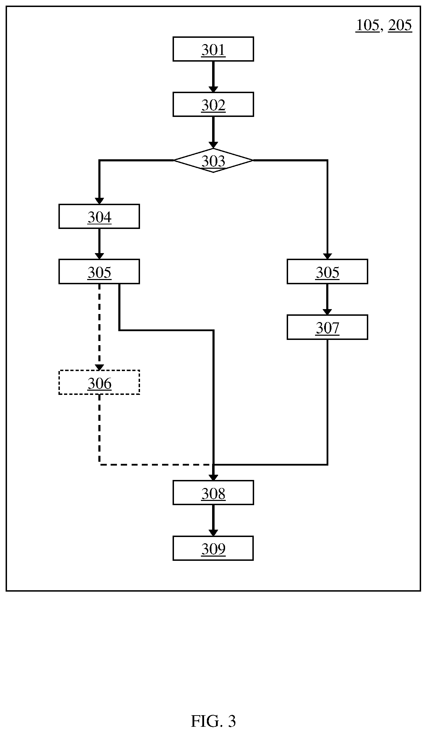

FIGs. 3-8 illustrate various implementation details of the methods 1, 2 of FIGs. 1, 2 in accordance with the present disclosure.

FIG. 3 illustrates a *"Thresholding(k)"* procedure used in FIGs. 1 and 2, respectively.

Given a trained attention operator $op$, and given its calibrated list of element thresholds $thresholds_{op,k}$ this procedure is a modification of the original attention operation, that applies the calibrated thresholds to select the important attention elements (ones that exceed the threshold).

This achieves a faster computation of the attention operator on the input matrices Q, K, V.

Inferencing 105, 205 from the respective attention operator $OP_l$ in accordance with the inference token sequence $x^{inf}$, the list of calibrated element thresholds $threshold_{OPl,k}$ for the respective attention operator $OP_l$ and the user-defined parameter $k$ may comprise: computing 301 a query matrix $Q := W^{(q)}x^{inf}$, a key matrix $K := W^{(k)}x^{inf}$ and a value matrix $V := W^{(v)}x^{inf}$ in accordance with trained parameter matrices $W^{(q)}$, $W^{(k)}$, $W^{(v)}$ of the respective attention operator $OP_l$ and the inference token sequence $x^{inf}$.

Inferencing 105, 205 may further comprise computing 302 a pre-softmax attention matrix $A := QK^T/\sqrt{d}$ in accordance with the query and key matrices $Q$, $K$ and an embedding size $d$, and may include masking this attention (e.g. using causality mask);

Inferencing 105, 205 may further comprise establishing 303 if a pre-softmax or post-softmax filtering applies.

In other words, the procedure can operate in one of at least two variants of operator placement: (i) pre-softmax or (ii) post-softmax operator (if calibrated in the same placement), wherein pre-softmax placement can benefit from a softmax denominator compensation (SDC) method (see below).

Based on the placement variant, the attention matrix S (for post-softmax) or $A$ (for pre-softmax) is obtained.

In both variants, each of the attention matrix elements are compared to the calibrated threshold and the elements selected for further computation only if they are above the threshold.

Inferencing 105, 205 may further comprise, in case of a pre-softmax filtering, filtering 304 the pre-softmax attention matrix $A$ in accordance with the list of calibrated element thresholds $threshold_{OP,k}$ and the user-defined parameter $k$.

Inferencing 105, 205 may further comprise computing 305 a post-softmax attention matrix $S := RowSoftmax(A)$ by applying a softmax operation $softmax(a_r)$ to each row $a_r$ of the pre-softmax attention matrix $A$.

Inferencing 105, 205 may further comprise, in case of the pre-softmax filtering, renormalizing 306 the post-softmax attention matrix $S := SDC(S)$.

Inferencing 105, 205 may further comprise, in case of a post-softmax filtering, filtering 307 the post-softmax attention matrix $S$ in accordance with the list of calibrated element thresholds $threshold_{OP,k}$ and the user-defined parameter $k$.

Then apply the gathered loading (GLD) method to take advantage of the reduced size of attention matrix, and to load only the respective values (V) matrix rows: Given a trained and calibrated attention operator whose attention matrix has underwent a selection of elements based on calibrated thresholds, this method uses the selected attention matrix elements to load the according rows of the values (V) matrix from the memory.

This achieves a reduced memory bandwidth, compared to reading the full V matrix.

Inferencing 105, 205 may further comprise loading 308 those rows $V_{gathered}$ of the value matrix $V$ corresponding to the non-zero elements of the post-softmax attention matrix $S$.

Then multiply the loaded subset of V matrix rows by the attention matrix S - i.e. matmul(S,V): Inferencing 105, 205 may further comprise multiplying 309 the loaded rows $V_{gathered}$ of the value matrix $V$ and the post-softmax attention matrix $S$.

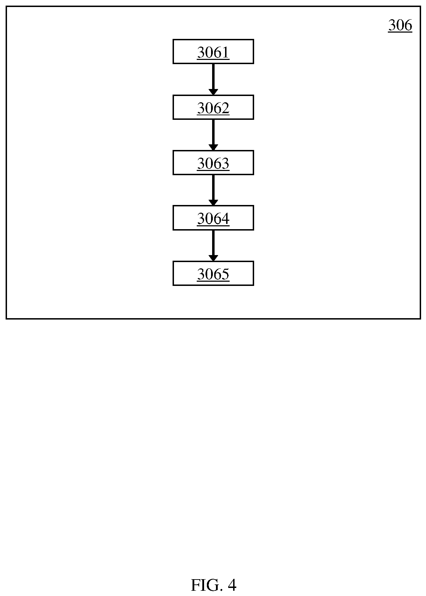

FIG. 4 illustrates a *"Softmax denominator compensation (SDC)"* procedure used in FIG. 3.

This optional procedure mitigates the output quality degradation by compensating the discrepancy between (i) the softmax values of the thresholded attention matrix and (ii) the softmax values that should have been computed without thresholding (i.e. in the original operator in which no elements were filtered out).

The procedure computes the softmax denominator part that comes from the elements removed by the thresholding method (not selected elements), and renormalizes the attention elements to resemble their values as if the thresholding was performed post-softmax (which usually yields higher quality of model results).

This achieves a better quality of model results, compared to not using this compensation.

Renormalizing 306 the post-softmax attention matrix $S := SDC(S)$ may comprise maintaining 3061 a residual pre-softmax attention matrix $A^{(res)}$ comprising only elements that were filtered out.

Renormalizing 306 may further comprise computing 3062 a vector $m^{(res)}$ of per-row sums of elementwise exponentiated matrix $A^{(res)}$, wherein every element of $m^{(res)}$ is a sum of a respective single row of a matrix $E^{(res)}$ having elements $E^{(res)} = e^{A_{i,j}^{(res)}}$.

Renormalizing 306 may further comprise computing 3063 a vector $m^{(sel)}$ of per-row sums of an elementwise exponentiated pre-softmax attention matrix $A$, wherein every element of $m^{(sel)}$ is a sum of a respective single row of a matrix $E$ having elements $E_{i,j} = e^{A_{i,j}}$, or receiving the vector $m^{(sel)}$ as an intermediate result of the previously completed computing of the post-softmax attention matrix $S := RowSoftmax(A)$.

Renormalizing 306 may further comprise multiplying 3064 each element of each row $r$ of the post-softmax attention matrix $S$ by $m_r^{(sel)}$.

Renormalizing 306 may further comprise dividing 3065 each element of each row $r$ of the post-softmax attention matrix $S$ by $m_r^{(res)} + m_r^{(sel)}$.

Renormalizing 306 may further comprise computing 3062 a vector $m^{(res)}$ and computing 3063 a vector $m^{(sel)}$ may respectively comprise: subtracting row-wise maximum values.

FIG. 5 illustrates an *"Offline-calibration ($K_{set}$)"* procedure used in FIG. 1.

Given a model that employs attention operators (e.g. transformer-based large language model) and given the set of parameter values $K_{set}=\{k_1,k_2,...\}$ the calibration procedure determines the respective lists of element thresholds $\{thresholds_{op,k1}, thresholds_{op,k2}, ... \}$ required to perform efficient inference for every attention operator $op$ separately.

The procedure requires providing it with a small set of training examples to observe the characteristic attention matrix values and to determine the thresholds needed to compare the values against.

From a functional point of view, the calibration's objective is finding the threshold values that will allow keeping approximately $k_1, k_2,...$ elements respectively from the attention rows (keeping an element if and only if it is greater than the threshold).

$K_{set}$ is a set of natural-valued parameters $k_i$, for which the real-values thresholds should be calibrated. Each $k_i$ determines the number of attention elements to be selected by the thresholding (comparison to threshold).

This procedure should be performed only once to make the model suitable for efficient inference using thresholds.

Each *threshold value* "thresholds$_{op,k,r}$" is a floating point (real valued) number, to be used during the inference to compare the value of the attention matrix produced by the attention operator *op* in order to keep up to *k* out of *n* elements in the *r*th row of the attention matrix (or of *n* elements of the attention vector).

Each *threshold list* "thresholds$_{op,k}$" is essentially a function that maps the attention vector length to the appropriate floating-point threshold.

This yields all the threshold lists "thresholds$_{op,k}$" for all operators and all the desired k parameters specified in the $K_{set}$ set, to be applied during the inference for the attention operator op to meet the required k elements per attention row.

Offline-calibrating 103 a list of calibrated element thresholds $threshold_{OP_{l,k_i}}$ for the respective attention operator $OP_l$ of the model using the set of calibration token sequences $x_c^{cal}$ may comprise receiving 401 a set $K_{set}$ of calibration parameters $k_i$ controlling a filtering of an attention matrix of the respective attention operator $OP_l$ keeping ideally $k_i$ out of the elements in each of the corresponding rows of the attention matrix.

Offline-calibrating 103 may further comprise receiving 402 a respective calibration token sequence $x^{cal}$ of the set.

Offline-calibrating 103 may further comprise receiving 403 a respective attention operator $OP_l$ of the model.

Offline-calibrating 103 may further comprise computing 404 a query matrix $Q := W^{(q)}x^{cal}$, a key matrix $K := W^{(k)}x^{cal}$ and a value matrix $V := W^{(v)}x^{cal}$ in accordance with trained parameter matrices $W^{(q)}$, $W^{(k)}$, $W^{(v)}$ of the respective attention operator $OP_l$ and the respective calibration token sequence $x^{cal}$.

Offline-calibrating 103 may further comprise computing 405 a pre-softmax attention matrix $A := QK^T/\sqrt{d}$ in accordance with the query and key matrices $Q, K$ and an embedding size $d$, and may include masking this attention (e.g. using causality mask);.

Offline-calibrating 103 may further comprise establishing 406 if a pre-softmax or post-softmax filtering applies.

Offline-calibrating 103 may further comprise, in case of a pre-softmax filtering, appending 407 a $(1 - k_i/n)^{th}$ quantile of the elements of the $r^{th}$ row of the pre-softmax attention matrix $A$ to a list of recorded element thresholds $recorded\_threshold_{OP_{l,k_i,r}}$ for every row $r$ of the pre-softmax attention matrix $A$ and for every parameter $k_i$ in the set $K_{set}$, wherein n is the number of elements in every row of $A$.

Offline-calibrating 103 may further comprise computing 408 a post-softmax attention matrix $S := RowSoftmax(A)$ by applying a softmax operation $softmax(a_r)$ to each row $a_r$ of the pre-softmax attention matrix $A$.

Offline-calibrating 103 may further comprise, in case of a post-softmax filtering, appending 409 a $(1 - k_i/n)^{th}$ quantile of the elements of the $r^{th}$ row of the post-softmax attention matrix $S$ to a list of recorded element thresholds $recorded\_threshold_{OP_{l,k_i,r}}$ for every row $r$ of the post-softmax attention matrix $S$ and for every parameter $k_i$ in the set $K_{set}$, wherein n is the number of elements in every row of $S$

The following *"TAC - Top-k At Calibration"* procedure emulates the existence of the top-threshold sparsification while calibrating, and produces an output of a current attention operator to resemble the top-threshold method that will be in place for the inference.

The emulation is by finding the exact top-k elements of every row of the attention matrix.

The purpose of applying the sparsification during the calibration, is in order to prepare an input for the following attention operators, in a way that will resemble the existence of the top-threshold sparsification that will be in place during the inference, thereby producing better thresholds.

Offline-calibrating 103 may thus further comprise retrieving 410 values and indices of the $k_i$ largest elements of every row $r$ of a post-softmax attention matrix $S$ of the respective attention operator $OP_l$ in accordance with the calibration parameters $k_i$. In turn, retrieving 410 values and indices of the $k_i$ largest elements of every row r of an attention matrix $A$ or $S$ of the respective attention operator $OP_l$ in accordance with the calibration parameter $k_i$ may comprise identifying (not shown) the values and indices of the $k_i$ largest elements of every row $r$ of the attention matrix $A$ or $S$.

Offline-calibrating 103 may further comprise proceeding 411 at receiving a respective attention operator, if available.

Offline-calibrating 103 may further comprise proceeding 412 at receiving a respective calibration token sequence, if available.

Offline-calibrating 103 may further comprise computing 413 the calibrated element threshold $threshold_{OP_{l,k,r}}$ of the respective attention operator $OP_l$ in accordance with the list of recorded element thresholds $recorded\_threshold_{OP_{l,k,r}}$ for the respective row r and for the parameter $k$ comprising the respective calibration parameter $k_i$ in the set $K_{set}$.

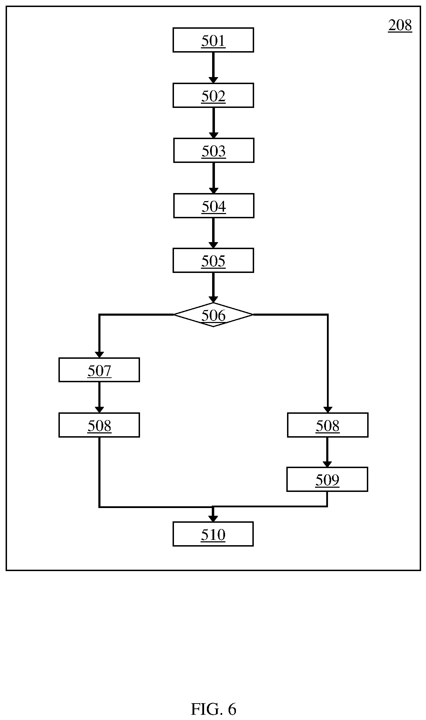

FIG. 6 illustrates an *"Online-calibration (k)"* procedure used in FIG. 2.

Given an attention operator and given a parameter value $k$, the calibration procedure determines or updates an existing the respective list of element thresholds $thresholds_{op,k}$ required to perform efficient inference.

The procedure uses a single input sequence to observe the characteristic attention matrix values and to determine the thresholds needed to compare the values against, in order to select $k$ elements.

$k$ is a parameter for which the thresholds should be calibrated. $k$ determines the number of attention elements to be selected by the thresholding, when applied during the inference.

This procedure should be performed only when the calibration confidence of an online variant of the invention is low.

Each threshold is a real number (floating point) that is calibrated individually for every sequence length (i.e. length of the attention row vector)

This yields a threshold list $thresholds_{op,k}$ for the given operator, to be applied during the inference for the attention operator $op$ to meet the required $k$ elements per attention row.

Online-calibrating 208 a list of calibrated element thresholds $threshold_{OPl,k}$ for the respective attention operator $OP_l$ using the respective inference token sequence $x^{inf}$ may comprise receiving 501 a user-defined parameter $k$ controlling a filtering of an attention matrix of the respective attention operator $OP_l$ keeping ideally $k$ out of the elements in each of the corresponding rows of the attention matrix.

Online-calibrating 208 may further comprise receiving 502 the list of calibrated element thresholds $threshold_{OPl,k}$ of the respective attention operator $OP_l$.

Online-calibrating 208 may further comprise receiving 503 the list of recorded element thresholds $recorded\_thresholds_{OPl,k,r}$ of the respective attention operator $OP_l$ for each of the rows r.

Online-calibrating 208 may further comprise computing 504 a query matrix $Q: = W^{(q)}x^{cal}$, a key matrix $K: = W^{(k)}x^{cal}$ and a value matrix $V: = W^{(v)}x^{cal}$ in accordance with trained parameter matrices $W^{(q)}$, $W^{(k)}$, $W^{(v)}$ of the respective attention operator $OP_l$ and the respective inference token sequence $x^{inf}$.

Online-calibrating 208 may further comprise computing 505 a pre-softmax attention matrix $A: = QK^T/\sqrt{d}$ in accordance with the query and key matrices $Q$, $K$ and an embedding size $d$, and may include masking this attention (e.g. using causality mask).

Online-calibrating 208 may further comprise establishing 506 if a pre-softmax or post-softmax filtering applies.

Online-calibrating 208 may further comprise, in case of a pre-softmax filtering, appending 507 a $(1 - k/n)^{th}$ quantile of the elements of the $r^{th}$ row of the pre-softmax attention matrix $A$ to a list of recorded element thresholds $recorded\_threshold_{OPl,k,r}$ for the user-defined parameter $k$ and for every row r of the pre-softmax attention matrix $A$, wherein $n$ is the number of elements in every row of $A$.

Online-calibrating 208 may further comprise computing 508 a post-softmax attention matrix $S: = RowSoftmax(A)$ by applying a softmax operation $softmax(a_r)$ to each row $a_r$ of the pre-softmax attention matrix $A$.

Online-calibrating 208 may further comprise, in case of a post-softmax filtering, appending 509 a $(1 - k/n)^{th}$ quantile of the elements of the $r^{th}$ row of the post-softmax attention matrix $S$ to the list of recorded element thresholds $recorded\_threshold_{OPl,k,r}$ for the user-defined parameter $k$ and for every row r of the post-softmax attention matrix $S$, wherein n is the number of elements in every row of $S$.

Online-calibrating 208 may further comprise computing 510 the calibrated element threshold $threshold_{OPl,k,r}$ of the respective attention operator $OP_l$ in accordance with the list of recorded element thresholds $recorded\_threshold_{OPl,k,r}$ for the row $r$ and the parameter $k$, wherein the parameter $k$ comprises the user-defined parameter $k$.

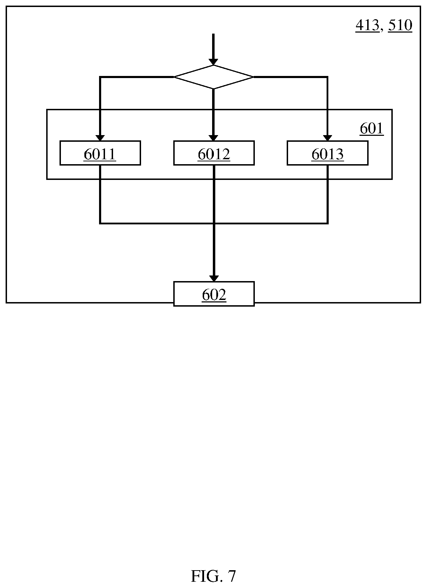

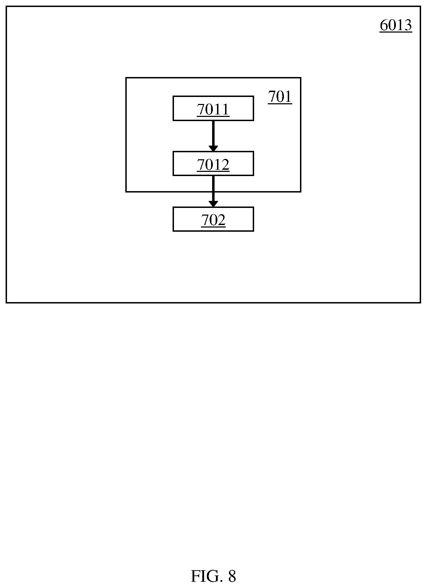

FIGs. 7 and 8 illustrate a *"TAGG (k) - Threshold AGGregation"* procedure used in FIGs. 5 and 6, respectively.

The procedure aggregates the list of recorded per-calibration-input thresholds into one single threshold to be deployed for the top-threshold attention inference.

Computing 413, 510 the calibrated element threshold $threshold_{OPl,k,r}$ of the respective attention operator $OP_l$ in accordance with the list of recorded element thresholds $recorded\_threshold_{OPl,k,r}$ for the respective row $r$ and the parameter $k$ may comprise computing 601 a threshold from the list of recorded element thresholds $recorded\_threshold_{OPl,k,r}$ and setting 602 the computed threshold as the calibrated element threshold $threshold_{OPl,k,r}$.

An aggregation operation such as "average", "maximum"", median", "mean" or other arithmetic reduction operation is applied to the list of recorded thresholds.

In particular, computing 601 a threshold from the list of recorded element thresholds $recorded\_threshold_{OPl,k,r}$ may comprise one of: selecting 6011 a maximum threshold from the list of recorded element thresholds $recorded\_threshold_{OPl,k,r}$; selecting 6012 an average threshold from the list of recorded element thresholds $recorded\_threshold_{OPl,k,r}$; and selecting 6013 one of the thresholds from the list of recorded element thresholds $recorded\_threshold_{OPl,k,r}$ according to the parameter $k$ and the row $r$.

In turn, selecting 6013 one of the thresholds from the list of recorded element thresholds $recorded\_threshold_{OPl,k,r}$ according to the parameter $k$ and the row $r$ may comprise computing 701 a numeric value $effective\_k_t$ for each of the thresholds $t$ of the list of recorded element thresholds $recorded\_threshold_{OPl,k,r}$.

FIG. 8 illustrates an implementation detail of FIG. 7.

In turn, computing 701 may comprise computing 7011 a value $passx_{x,t}$ by filtering row $r$ using the threshold $t$ and counting a number of elements that exceed the threshold, for every token sequence $x$ used in the creation of the list of recorded element thresholds *recorded_threshold$_{OPl,k,r}$*.

Computing 701 may further comprise computing 7012 the numeric value *effective_k$_t$* for the threshold *t* as an arithmetic average across all *passx$_{x,t}$* values of all the token sequences *x* used in the creation of the list of recorded element thresholds *recorded_threshold$_{OPl,k,r}$*.

The function *effective_k(threshold)* maps every observed threshold value to an average number of attention elements that surpass this *threshold.* This average is computed across all the calibration examples, for the given attention vector length (attention vector length is the input sequence length).

Selecting 6013 may further comprise selecting 702 one of the thresholds *t* of the list of recorded element thresholds *recorded_threshold$_{OPl,k,r}$* which minimizes a difference between its respective *effective_k$_t$* and the number *k.*

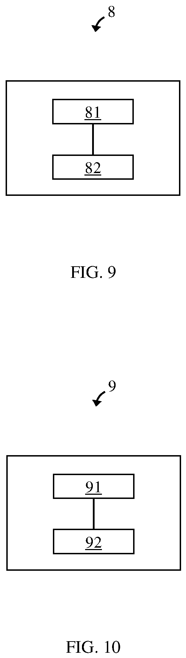

FIG. 9 illustrates a first device 8 in accordance with the present disclosure.

The device 8 comprises a trained model 81, such as a transformer, an LLM or a ViT, comprising topologically ordered attention operators $OP_{l \in \mathcal{L}}$ ; and a processor 82, such as a graphics processing unit (GPU), application-specific integrated circuit (ASIC), digital signal processor (DSP), central processing unit (CPU) and the like.

The device 8 may be configured to perform the method 1 of the first aspect or any of its implementations.

This means that the device 8 is configured to receive 101 a set of calibration token sequences $x_c^{cal}$ ; receive 102 a set $K_{set}$ of calibration parameters $k_i$; offline-calibrate 103 a list of calibrated element thresholds $threshold_{OP_{l,k_i}}$ for the respective attention operator $OP_l$ of the model using the set of calibration token sequences $x_c^{cal}$ , for each calibration parameter $k_i$ in the set $K_{set}$, the list of calibrated element thresholds $threshold_{OP_{l,k_i}}$ implementing a filtering of an attention matrix of the respective attention operator $OP_l$ keeping ideally $k_i$ out of the elements in each of the corresponding rows of the attention matrix; receive 104 an inference token sequence $x^{inf}$ and a user-defined parameter *k* for the filtering; infer 105 from the respective attention operator $OP_l$ in accordance with the inference token sequence $x^{inf}$, the list of calibrated element thresholds *threshold$_{OPl,k}$* for the respective attention operator $OP_l$ and the user-defined parameter *k*; and output 106 an inference result and proceeding at receiving an inference token sequence.

FIG. 10 illustrates a second device 9 in accordance with the present disclosure.

The device 9 comprises a trained model 91, such as a transformer, an LLM or a ViT, comprising topologically ordered attention operators $OP_{l \in \mathcal{L}}$ ; and a processor 92, such as a GPU, ASIC, DSP, CPU and the like.

The device 9 may be configured to perform the method 2 of the second aspect or any of its implementations.

That is to say, the device 9 is configured to reset 201 a calibration confidence; receive 202 an inference token sequence $x^{inf}$ and a user-defined parameter *k* for the filtering; receive 203 a respective attention operator $OP_l$ of the model; compare 204 the calibration confidence with a minimum calibration confidence threshold; if the calibration confidence is higher than the minimum calibration confidence threshold, infer 205 from the respective attention operator $OP_l$ in accordance with the inference token sequence $x^{inf}$, the list of calibrated element thresholds *threshold$_{OPl,k}$* for the respective attention operator $OP_l$ and the user-defined parameter *k*; and if a number of kept elements of the $r^{th}$ row differs from the user-defined parameter *k* by a minimum percentage, decrease 206 the calibration confidence; if the calibration confidence is lower than the minimum calibration confidence threshold and/or after every fixed number of inferences, infer 207 from the respective attention operator $OP_l$ in accordance with the inference token sequence $x^{inf}$; online-calibrate 208 a list of calibrated element thresholds *threshold$_{OPl,k}$* for the respective attention operator $OP_l$ using the inference token sequence $x^{inf}$; and increase 209 the calibration confidence; proceed 210 at receiving a respective attention operator, if available; and output 211 an inference result and proceed at receiving an inference token sequence.

"(Term)" as used herein refers to (definition).

The present disclosure has been described in conjunction with various implementations as examples. However, other variations can be understood and effected by those persons skilled in the art and practicing the claimed matter, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation. A computer program may be stored/distributed on a suitable medium, such as an optical storage medium or a solid-state medium supplied together with or as part of other hardware, but may also be distributed in other forms, such as via the Internet or other wired or wireless telecommunication systems.

## Claims

1. A method (1) of operating a trained model comprising topologically ordered attention operators $OP_{l \in \mathcal{L}}$, the method (1) comprising

   - receiving (101) a set of calibration token sequences $x_c^{cal}$;
   - receiving (102) a set $K_{set}$ of calibration parameters $k_i$;

   - offline-calibrating (103) a list of calibrated element thresholds $threshold_{OP_{l,k_i}}$ for the respective attention operator $OP_l$ of the model using the set of calibration token sequences $x_c^{cal}$ for each calibration parameter $k_i$ in the set $K_{set}$, the list of calibrated element thresholds $threshold_{OPl,ki}$ implementing a filtering of an attention matrix of the respective attention operator $OP_l$ keeping ideally $k_i$ out of the elements in each of the corresponding rows of the attention matrix;
   - receiving (104) an inference token sequence $x^{inf}$ and a user-defined parameter $k$ for the filtering;
   - inferencing (105) from the respective attention operator $OP_l$ in accordance with the inference token sequence $x^{inf}$, the list of calibrated element thresholds $threshold_{OPl,k}$ for the respective attention operator $OP_l$ and the user-defined parameter $k$; and
   - outputting (106) an inference result and proceeding at receiving an inference token sequence.

2. A method (2) of operating a trained model comprising topologically ordered attention operators $OP_{l \in \mathcal{L}}$, the method (2) comprising

   - resetting (201) a calibration confidence;
   - receiving (202) an inference token sequence $x^{inf}$ and a user-defined parameter $k$ for the filtering;
   - receiving (203) a respective attention operator $OP_l$ of the model;
   - comparing (204) the calibration confidence with a minimum threshold;
   - if the calibration confidence is higher than the minimum calibration confidence threshold,

     - inferencing (205) from the respective attention operator $OP_l$ in accordance with the inference token sequence $x^{inf}$, the list of calibrated element thresholds $threshold_{OPl,k}$ for the respective attention operator $OP_l$ and the user-defined parameter $k$; and
     - if a number of kept elements of the $r^{th}$ row differs from the user-defined parameter $k$ by a minimum percentage, decreasing (206) the calibration confidence;

   - if the calibration confidence is lower than the minimum calibration confidence threshold and/or after every fixed number of inferences,

     - inferencing (207) from the respective attention operator $OP_l$ in accordance with the inference token sequence $x^{inf}$;
     - online-calibrating (208) a list of calibrated element thresholds $threshold_{OPl,k}$ for the respective attention operator $OP_l$ using the inference token sequence $x^{inf}$; and
     - increasing (209) the calibration confidence;

   - proceeding (210) at receiving a respective attention operator, if available; and
   - outputting (211) an inference result and proceeding at receiving an inference token sequence.

3. The method (1, 2) of claim 1 or claim 2,
   inferencing (105, 205) from the respective attention operator $OP_l$ in accordance with the inference token sequence $x^{inf}$, the list of calibrated element thresholds $threshold_{OPl,k}$ for the respective attention operator $OP_l$ and the user-defined parameter $k$ comprising

   - computing (301) a query matrix $Q := W^{(q)}x^{inf}$, a key matrix $K := W^{(k)}x^{inf}$ and a value matrix $V := W^{(v)}x^{inf}$ in accordance with trained parameter matrices $W^{(q)}$, $W^{(k)}$, $W^{(v)}$ of the respective attention operator $OP_l$ and the inference token sequence $x^{inf}$;

   - computing (302) a pre-softmax attention matrix $A := QK^T/\sqrt{d}$ in accordance with the query and key matrices $Q$,

*K* and an embedding size *d,* and may include masking this attention (e.g. using causality mask);
- establishing (303) if a pre-softmax or post-softmax filtering applies;
- in case of a pre-softmax filtering,

- filtering (304) the pre-softmax attention matrix *A* in accordance with the list of calibrated element thresholds *threshold$_{OP,k}$* and the user-defined parameter *k*;

- computing (305) a post-softmax attention matrix *S*: = *RowSoftmax*(*A*) by applying a softmax operation *softmax* (*a$_r$*) to each row *a$_r$* of the pre-softmax attention matrix *A*;
- in case of a post-softmax filtering,

- filtering (307) the post-softmax attention matrix *S* in accordance with the list of calibrated element thresholds *threshold$_{OP,k}$* and the user-defined parameter *k*;

- loading (308) those rows *V$_{gathered}$* of the value matrix *V* corresponding to the non-zero elements of the post-softmax attention matrix *S*; and
- multiplying (309) the loaded rows *V$_{gathered}$* of the value matrix *V* and the post-softmax attention matrix *S*.

4. The method (1, 2) of claim 3, further comprising

- in case of the pre-softmax filtering,

- renormalizing (306) the post-softmax attention matrix *S*: = *SDC(S)*.

5. The method (1, 2) of claim 4,
renormalizing (306) the post-softmax attention matrix *S*: = *SDC*(*S*) comprising

- maintaining (3061) a residual pre-softmax attention matrix *A$^{(res)}$* comprising only elements that were filtered out;
- computing (3062) a vector *m$^{(res)}$* of per-row sums of elementwise exponentiated matrix *A$^{(res)}$*, wherein every element of *m$^{(res)}$* is a sum of a respective single row of a matrix *E$^{(res)}$* having elements $E_{i,j}^{(res)} = e^{A_{i,j}^{(res)}}$ ;
- computing (3063) a vector *m$^{(sel)}$* of per-row sums of an elementwise exponentiated pre-softmax attention matrix A, wherein every element of *m$^{(sel)}$* is a sum of a respective single row of a matrix *E* having elements $E_{i,j} = e^{A_{i,j}}$, or receiving the vector *m$^{(sel)}$* as an intermediate result of the previously completed computing of the post-softmax attention matrix *S*: = *RowSoftmax*(*A*);

- multiplying (3064) each element of each row *r* of the post-softmax attention matrix *S* by $m_r^{(sel)}$ ; and

- dividing (3065) each element of each row *r* of the post-softmax attention matrix *S* by $m_r^{(res)} + m_r^{(sel)}$ .

6. The method (1, 2) of claim 5,
computing (3062) a vector *m$^{(res)}$* and computing (3063) a vector *m$^{(sel)}$* respectively comprising

- subtracting row-wise maximum values.

7. The method (1, 2) of any one of the claims 1-6 when depending on claim 1,
offline-calibrating (103) a list of calibrated element thresholds $threshold_{OP_{l,k_i}}$ for the respective attention operator *OP$_l$* of the model using the set of calibration token sequences $x_c^{cal}$ comprising

- receiving (401) a set *K$_{set}$* of calibration parameters *k$_i$* controlling a filtering of an attention matrix of the respective attention operator *OP$_l$* keeping ideally *k$_i$* out of the elements in each of the corresponding rows of the attention matrix;
- receiving (402) a respective calibration token sequence *x$^{cal}$* of the set;
- receiving (403) a respective attention operator *OP$_l$* of the model;
- computing (404) a query matrix *Q*: = *W$^{(q)}$x$^{cal}$*, a key matrix *K*: = *W$^{(k)}$x$^{cal}$* and a value matrix *V*: = *W$^{(v)}$x$^{cal}$* in accordance with trained parameter matrices *W$^{(q)}$*, *W$^{(k)}$*, *W$^{(v)}$* of the respective attention operator *OP$_l$* and the

respective calibration token sequence $x^{cal}$;

- computing (405) a pre-softmax attention matrix $A := QK^T/\sqrt{d}$ in accordance with the query and key matrices $Q$, $K$ and an embedding size $d$, and may include masking this attention (e.g. using causality mask);;
- establishing (406) if a pre-softmax or post-softmax filtering applies;
- in case of a pre-softmax filtering,

    - appending (407) a $(1 - k_i/n)^{th}$ quantile of the elements of the $r^{th}$ row of the pre-softmax attention matrix $A$ to a list of recorded element thresholds $recorded\_threshold_{OP_{l,k_i,r}}$ for every row r of the pre-softmax attention matrix $A$ and for every parameter $k_i$ in the set $K_{set}$, wherein n is the number of elements in every row of $A$;

- computing (408) a post-softmax attention matrix $S := RowSoftmax(A)$ by applying a softmax operation $softmax$ $(a_r)$ to each row $a_r$ of the pre-softmax attention matrix $A$;
- in case of a post-softmax filtering,

    - appending (409) a $(1 - k_i/n)^{th}$ quantile of the elements of the $r^{th}$ row of the post-softmax attention matrix $S$ to a list of recorded element thresholds $recorded\_threshold_{OP_{l,k_i,r}}$ for every row $r$ of the post-softmax attention matrix $S$ and for every parameter $k_i$ in the set $K_{set}$, wherein $n$ is the number of elements in every row of $S$;

- retrieving (410) values and indices of the $k_i$ largest elements of every row $r$ of a post-softmax attention matrix $S$ of the respective attention operator $OP_l$ in accordance with the calibration parameters $k_i$
- proceeding (411) at receiving a respective attention operator, if available;
- proceeding (412) at receiving a respective calibration token sequence, if available; and
- computing (413) the calibrated element threshold $threshold_{OP_{l,k,r}}$ of the respective attention operator $OP_l$ in accordance with the list of recorded element thresholds $recorded\_threshold_{OP_{l,k,r}}$ for the respective row $r$ and for the parameter $k$ comprising the respective calibration parameter $k_i$ in the set $K_{set}$.

**8.** The method (1, 2) of claim 7,
retrieving (410) values and indices of the $k_i$ largest elements of every row $r$ of an attention matrix $A$ or $S$ of the respective attention operator $OP_l$ in accordance with the calibration parameter $k_i$ comprising

    - identifying the values and indices of the $k_i$ largest elements of every row r of the attention matrix $A$ or $S$.

**9.** The method (1, 2) of any one of the claims 2-8 when depending on claim 2,
online-calibrating (208) a list of calibrated element thresholds $threshold_{OP_{l,k}}$ for the respective attention operator $OP_l$ using the respective inference token sequence $x^{inf}$ comprising

    - receiving (501) a user-defined parameter $k$ controlling a filtering of an attention matrix of the respective attention operator $OP_l$ keeping ideally $k$ out of the elements in each of the corresponding rows of the attention matrix;
    - receiving (502) the list of calibrated element thresholds $threshold_{OP_{l,k}}$ of the respective attention operator $OP_l$;
    - receiving (503) the list of recorded element thresholds $recorded\_thresholds_{OP_{l,k,r}}$ of the respective attention operator $OP_l$ for each of the rows $r$;
    - computing (504) a query matrix $Q := W^{(q)}x^{cal}$, a key matrix $K := W^{(k)}x^{cal}$ and a value matrix $V := W^{(v)}x^{cal}$ in accordance with trained parameter matrices $W^{(q)}$, $W^{(k)}$, $W^{(v)}$ of the respective attention operator $OP_l$ and the respective inference token sequence $x^{inf}$,

    - computing (505) a pre-softmax attention matrix $A := QK^T/\sqrt{d}$ in accordance with the query and key matrices $Q$, $K$ and an embedding size $d$, and may include masking this attention (e.g. using causality mask);;
    - establishing (506) if a pre-softmax or post-softmax filtering applies;
    - in case of a pre-softmax filtering,

        - appending (507) a $(1 - k/n)^{th}$ quantile of the elements of the $r^{th}$ row of the pre-softmax attention matrix $A$ to a list of recorded element thresholds $recorded\_threshold_{OP_{l,k,r}}$ for the user-defined parameter $k$ and for every row $r$ of the pre-softmax attention matrix $A$, wherein $n$ is the number of elements in every row of $A$;

    - computing (508) a post-softmax attention matrix $S := RowSoftmax(A)$ by applying a softmax operation $softmax$ $(a_r)$ to each row $a_r$ of the pre-softmax attention matrix $A$;

- in case of a post-softmax filtering,

- appending (509) a $(1 - k/n)^{th}$ quantile of the elements of the $r^{th}$ row of the post-softmax attention matrix $S$ to the list of recorded element thresholds $recorded\_threshold_{OPI,k,r}$ for the user-defined parameter $k$ and for every row $r$ of the post-softmax attention matrix $S$, wherein $n$ is the number of elements in every row of $S$;

- computing (510) the calibrated element threshold $threshold_{OPI,k,r}$ of the respective attention operator $OP_l$ in accordance with the list of recorded element thresholds $recorded\_threshold_{OPI,k,r}$ for the row $r$ and the parameter $k$, wherein the parameter $k$ comprises the user-defined parameter $k$.

10. The method (1, 2) of any one of the claims 7-9,
computing (413, 510) the calibrated element threshold $threshold_{OPI,k,r}$ of the respective attention operator $OP_l$ in accordance with the list of recorded element thresholds $recorded\_threshold_{OPI,k,r}$ for the respective row $r$ and the parameter $k$ comprising

- computing (601) a threshold from the list of recorded element thresholds $recorded\_threshold_{OPI,k,r}$; and
- setting (602) the computed threshold as the calibrated element threshold $threshold_{OPI,k,r}$

11. The method (1, 2) of claim 10,
computing (601) a threshold from the list of recorded element thresholds $recorded\_threshold_{OPI,k,r}$ comprising one of

- selecting (6011) a maximum threshold from the list of recorded element thresholds $recorded\_threshold_{OPI,k,r}$;
- selecting (6012) an average threshold from the list of recorded element thresholds $recorded\_threshold_{OPI,k,r}$; and
- selecting (6013) one of the thresholds from the list of recorded element thresholds $recorded\_threshold_{OPI,k,r}$ according to the parameter $k$ and the row $r$.

12. The method (1, 2) of claim 11,
selecting (6013) one of the thresholds from the list of recorded element thresholds $recorded\_threshold_{OPI,k,r}$ according to the parameter $k$ and the row $r$ comprising

- computing (701) a numeric value $effective\_k_t$ for each of the thresholds $t$ of the list of recorded element thresholds $recorded\_threshold_{OPI,k,r}$ comprising

- computing (7011) a value $passx_{x,t}$ by filtering row r using the threshold $t$ and counting a number of elements that exceed the threshold, for every token sequence $x$ used in the creation of the list of recorded element thresholds $recorded\_threshold_{OPI,k,r}$;
- computing (7012) the numeric value $effective\_k_t$ for the threshold $t$ as an arithmetic average across all $passx_{x,t}$ values of all the token sequences $x$ used in the creation of the list of recorded element thresholds $recorded\_threshold_{OPI,k,r}$; and

- selecting (702) one of the thresholds $t$ of the list of recorded element thresholds $recorded\_threshold_{OPI,k,r}$ which minimizes a difference between its respective $effective\_k_t$ and the number $k$.

13. A computer program, comprising a program code for performing the method (1, 2) of any one of the claims 1-12 when executed on a computer.

14. A device (8), comprising

a trained model (81) comprising topologically ordered attention operators ; and
a processor (82);
the device (8) being configured to

- receive (101) a set of calibration token sequences $x_c^{cal}$ ;
- receive (102) a set $K_{set}$ of calibration parameters $k_i$;

- offline-calibrate (103) a list of calibrated element thresholds $threshold_{OP_{l,k_i}}$ for the respective attention

operator $OP_l$ of the model using the set of calibration token sequences $x_c^{cal}$, for each calibration parameter $k_i$ in the set $K_{set}$, the list of calibrated element thresholds $threshold_{OP_{l,k_i}}$ implementing a filtering of an attention matrix of the respective attention operator $OP_l$ keeping ideally $k_i$ out of the elements in each of the corresponding rows of the attention matrix;
- receive (104) an inference token sequence $x^{inf}$ and a user-defined parameter $k$ for the filtering;
- infer (105) from the respective attention operator $OP_l$ in accordance with the inference token sequence $x^{inf}$, the list of calibrated element thresholds $threshold_{OPl,k}$ for the respective attention operator $OP_l$ and the user-defined parameter $k$; and
- output (106) an inference result and proceeding at receiving an inference token sequence.

**15.** The device (8) of claim 14,
being configured to perform the method (1) of any one of the claims 3-12 when depending on claim 1.

**16.** A device (9), comprising

a trained model (91) comprising topologically ordered attention operators $OP_{l \in \mathcal{L}}$ ; and
a processor (92);
the device (9) being configured to

- reset (201) a calibration confidence;
- receive (202) an inference token sequence $x^{inf}$ and a user-defined parameter $k$ for the filtering;
- receive (203) a respective attention operator $OP_l$ of the model;
- compare (204) the calibration confidence with a minimum calibration confidence threshold;
- if the calibration confidence is higher than the minimum calibration confidence threshold,

- infer (205) from the respective attention operator $OP_l$ in accordance with the inference token sequence $x^{inf}$, the list of calibrated element thresholds $threshold_{OPl,k}$ for the respective attention operator $OP_l$ and the user-defined parameter $k$; and
- if a number of kept elements of the $r^{th}$ row differs from the user-defined parameter $k$ by a minimum percentage, decrease (206) the calibration confidence;

- if the calibration confidence is lower than the minimum calibration confidence threshold and/or after every fixed number of inferences,

- infer (207) from the respective attention operator $OP_l$ in accordance with the inference token sequence $x^{inf}$;
- online-calibrate (208) a list of calibrated element thresholds $threshold_{OPl,k}$ for the respective attention operator $OP_l$ using the inference token sequence $x^{inf}$; and
- increase (209) the calibration confidence;

- proceed (210) at receiving a respective attention operator, if available; and
- output (211) an inference result and proceed at receiving an inference token sequence.

**17.** The device (9) of claim 16,
being configured to perform the method (2) of any one of the claims 3-12 when depending on claim 2.

**Amended claims in accordance with Rule 137(2) EPC.**

**1.** A method (1) of operating a trained model comprising topologically ordered attention operators $OP_{l \in \mathcal{L}}$,

the method (1) comprising

- receiving (101) a set of calibration token sequences $x_c^{cal}$;
- receiving (102) a set $K_{set}$ of calibration parameters $k_i$ each defining a target number of attention matrix elements to limit the attention to;

- offline-calibrating (103) a list of calibrated element thresholds $threshold_{OP_{l,k_i}}$ for the respective attention operator $OP_l$ of the model using the set of calibration token sequences $x_c^{cal}$ for each calibration parameter $k_i$ in the set $K_{set}$, the list of calibrated element thresholds implementing a filtering of an attention matrix of the respective attention operator $OP_l$ to retain $k_i$ elements per attention row using a threshold comparison;;
- receiving (104) an inference token sequence $x^{inf}$ and a user-defined parameter $k$ for the filtering;
- inferencing (105) from the respective attention operator $OP_l$ in accordance with the inference token sequence $x^{inf}$, the list of calibrated element thresholds

$$threshold_{OP_{l,k}}$$

for the respective attention operator $OP_l$ and the user-defined parameter $k$, by applying the threshold-based filtering to the attention matrix; and

outputting (106) an inference result and proceeding at receiving an inference token sequence.

2. The method of claim 1, further comprising: resetting (201) a calibration confidence;

- receiving (202) an inference token sequence $x^{inf}$ and a user-defined parameter $k$ for the filtering;
- receiving (203) a respective attention operator $OP_l$ of the model;
- comparing (204) the calibration confidence with a minimum threshold;
- if the calibration confidence is higher than the minimum calibration confidence threshold,

  - inferencing (205) from the respective attention operator $OP_l$ in accordance with the inference token sequence $x^{inf}$, the list of calibrated element thresholds $threshold_{OP_{l,k}}$ for the respective attention operator $OP_l$ and the user-defined parameter $k$; and
  - if a number of kept elements of the $r^{th}$ row differs from the user-defined parameter $k$ by a minimum percentage, decreasing (206) the calibration confidence;

- if the calibration confidence is lower than the minimum calibration confidence threshold and/or after every fixed number of inferences,

  - inferencing (207) from the respective attention operator $OP_l$ in accordance with the inference token sequence $x^{inf}$;
  - online-calibrating (208) a list of calibrated element thresholds $threshold_{OP_{l,k}}$ for the respective attention operator $OP_l$ using the inference token sequence $x^{inf}$; and
  - increasing (209) the calibration confidence;

- proceeding (210) at receiving a respective attention operator, if available; and
- outputting (211) an inference result and proceeding at receiving an inference token sequence.

3. The method (1, 2) of claim 1 or claim 2,
inferencing (105, 205) from the respective attention operator $OP_l$ in accordance with the inference token sequence $x^{inf}$, the list of calibrated element thresholds $threshold_{OP_{l,k}}$ for the respective attention operator $OP_l$ and the user-defined parameter $k$ comprising

- computing (301) a query matrix $Q:= W^{(q)}x^{inf}$, a key matrix $K:= W^{(k)}x^{inf}$ and a value matrix $V:= W^{(v)}x^{inf}$ in accordance with trained parameter matrices $W^{(q)}$, $W^{(k)}$, $W^{(v)}$ of the respective attention operator $OP_l$ and the inference token sequence $x^{inf}$;

- computing (302) a pre-softmax attention matrix $A:= QK^T/\sqrt{d}$ in accordance with the query and key matrices $Q$, $K$ and an embedding size $d$, and may include masking this attention (e.g. using causality mask);
- establishing (303) if a pre-softmax or post-softmax filtering applies;
- in case of a pre-softmax filtering,

- filtering (304) the pre-softmax attention matrix $A$ in accordance with the list of calibrated element thresholds $threshold_{OP,k}$ and the user-defined parameter $k$;

- computing (305) a post-softmax attention matrix $S$: = $RowSoftmax(A)$ by applying a softmax operation *softmax* $(a_r)$ to each row $a_r$ of the pre-softmax attention matrix $A$;
- in case of a post-softmax filtering,

  - filtering (307) the post-softmax attention matrix $S$ in accordance with the list of calibrated element thresholds $threshold_{OP,k}$ and the user-defined parameter $k$;

- loading (308) those rows $V_{gathered}$ of the value matrix $V$ corresponding to the non-zero elements of the post-softmax attention matrix $S$; and
- multiplying (309) the loaded rows $V_{gathered}$ of the value matrix $V$ and the post-softmax attention matrix $S$.

4. The method (1, 2) of claim 3, further comprising

  - in case of the pre-softmax filtering,

    - renormalizing (306) the post-softmax attention matrix $S$: = $SDC(S)$.

5. The method (1, 2) of claim 4,
renormalizing (306) the post-softmax attention matrix $S$: = $SDC(S)$ comprising

  - maintaining (3061) a residual pre-softmax attention matrix $A^{(res)}$ comprising only elements that were filtered out;
  - computing (3062) a vector $m^{(res)}$ of per-row sums of elementwise exponentiated matrix $A^{(res)}$, wherein every element of $m^{(res)}$ is a sum of a respective single row of a matrix $E^{(res)}$ having elements $E_{i,j}^{(res)} = e^{A_{i,j}^{(res)}}$;
  - computing (3063) a vector $m^{(sel)}$ of per-row sums of an elementwise exponentiated pre-softmax attention matrix $A$, wherein every element of $m^{(sel)}$ is a sum of a respective single row of a matrix $E$ having elements $E_{i,j} = e^{A_{i,j}}$, or receiving the vector $m^{(sel)}$ as an intermediate result of the previously completed computing of the post-softmax attention matrix $S$: = $RowSoftmax(A)$;

    - multiplying (3064) each element of each row $r$ of the post-softmax attention matrix $S$ by $m_r^{(sel)}$; and

    - dividing (3065) each element of each row $r$ of the post-softmax attention matrix $S$ by $m_r^{(res)} + m_r^{(sel)}$.

6. The method (1, 2) of claim 5,
computing (3062) a vector $m^{(res)}$ and computing (3063) a vector $m^{(sel)}$ respectively comprising

  - subtracting row-wise maximum values.

7. The method (1, 2) of any one of the claims 1 - 6 when depending on claim 1, offline-calibrating (103) a list of calibrated element thresholds $threshold_{OP_l,k_i}$ for the respective attention operator $OP_l$ of the model using the set of calibration token sequences $x_c^{cal}$ comprising

  - receiving (401) a set $K_{set}$ of calibration parameters $k_i$ controlling a filtering of an attention matrix of the respective attention operator $OP_l$ keeping ideally $k_i$ out of the elements in each of the corresponding rows of the attention matrix;
  - receiving (402) a respective calibration token sequence $x^{cal}$ of the set;
  - receiving (403) a respective attention operator $OP_l$ of the model;
  - computing (404) a query matrix $Q$: = $W^{(q)}x^{cal}$, a key matrix $K$: = $W^{(k)}x^{cal}$ and a value matrix $V$: = $W^{(v)}x^{cal}$ in accordance with trained parameter matrices $W^{(q)}, W^{(k)}, W^{(v)}$ of the respective attention operator $OP_l$ and the respective calibration token sequence $x^{cal}$;

- computing (405) a pre-softmax attention matrix $A := QK^T / \sqrt{d}$ in accordance with the query and key matrices $Q$, $K$ and an embedding size $d$, and may include masking this attention (e.g. using causality mask);;
- establishing (406) if a pre-softmax or post-softmax filtering applies;
- in case of a pre-softmax filtering,

    - appending (407) a $(1 - k_i/n)^{th}$ quantile of the elements of the $r^{th}$ row of the pre-softmax attention matrix $A$ to a list of recorded element thresholds $recorded\_threshold_{OP_{l,k_i,r}}$ for every row $r$ of the pre-softmax attention matrix $A$ and for every parameter $k_i$ in the set $K_{set}$, wherein $n$ is the number of elements in every row of $A$;

    - computing (408) a post-softmax attention matrix $S := RowSoftmax(A)$ by applying a softmax operation $softmax(a_r)$ to each row $a_r$ of the pre-softmax attention matrix $A$;
- in case of a post-softmax filtering,

    - appending (409) a $(1 - k_i/n)^{th}$ quantile of the elements of the $r^{th}$ row of the post-softmax attention matrix $S$ to a list of recorded element thresholds $recorded\_threshold_{OP_{l,k_i,r}}$ for every row $r$ of the post-softmax attention matrix $S$ and for every parameter $k_i$ in the set $K_{set}$, wherein $n$ is the number of elements in every row of $S$;

    - retrieving (410) values and indices of the $k_i$ largest elements of every row $r$ of a post-softmax attention matrix $S$ of the respective attention operator $OP_l$ in accordance with the calibration parameters $k_i$;
- proceeding (411) at receiving a respective attention operator, if available;
- proceeding (412) at receiving a respective calibration token sequence, if available; and
- computing (413) the calibrated element threshold $threshold_{OP_{l,k,r}}$ of the respective attention operator $OP_l$ in accordance with the list of recorded element thresholds $recorded\_threshold_{OP_{l,k,r}}$ for the respective row r and for the parameter $k$ comprising the respective calibration parameter $k_i$ in the set $K_{set}$.

**8.** The method (1, 2) of claim 7,
retrieving (410) values and indices of the $k_i$ largest elements of every row $r$ of an attention matrix $A$ or $S$ of the respective attention operator $OP_l$ in accordance with the calibration parameter $k_i$ comprising

    - identifying the values and indices of the $k_i$ largest elements of every row r of the attention matrix $A$ or $S$.

**9.** The method (1, 2) of any one of the claims 2 - 8,
online-calibrating (208) a list of calibrated element thresholds $threshold_{OP_{l,k}}$ for the respective attention operator $OP_l$ using the respective inference token sequence $x^{inf}$ comprising

    - receiving (501) a user-defined parameter $k$ controlling a filtering of an attention matrix of the respective attention operator $OP_l$ keeping ideally $k$ out of the elements in each of the corresponding rows of the attention matrix;
    - receiving (502) the list of calibrated element thresholds $threshold_{OP_{l,k}}$ of the respective attention operator $OP_l$;
    - receiving (503) the list of recorded element thresholds $recorded\_thresholds_{OP_{l,k,r}}$ of the respective attention operator $OP_l$ for each of the rows r;
    - computing (504) a query matrix $Q := W^{(q)}x^{cal}$, a key matrix $K := W^{(k)}x^{cal}$ and a value matrix $V := W^{(v)}x^{cal}$ in accordance with trained parameter matrices $W^{(q)}$, $W^{(k)}$, $W^{(v)}$ of the respective attention operator $OP_l$ and the respective inference token sequence $x^{inf}$;

    - computing (505) a pre-softmax attention matrix $A := QK^T / \sqrt{d}$ in accordance with the query and key matrices $Q$, $K$ and an embedding size $d$, and may include masking this attention (e.g. using causality mask);;
    - establishing (506) if a pre-softmax or post-softmax filtering applies;
    - in case of a pre-softmax filtering,

        - appending (507) a $(1 - k/n)^{th}$ quantile of the elements of the $r^{th}$ row of the pre-softmax attention matrix A to a list of recorded element thresholds $recorded\_threshold_{OP_{l,k,r}}$ for the user-defined parameter $k$ and for every row $r$ of the pre-softmax attention matrix $A$, wherein $n$ is the number of elements in every row of $A$;

- computing (508) a post-softmax attention matrix $S := RowSoftmax(A)$ by applying a softmax operation *softmax* ($a_r$) to each row $a_r$ of the pre-softmax attention matrix $A$;
- in case of a post-softmax filtering,

   - appending (509) a $(1 - k/n)^{th}$ quantile of the elements of the $r^{th}$ row of the post-softmax attention matrix $S$ to the list of recorded element thresholds *recorded_threshold*$_{OP_{l,k,r}}$ for the user-defined parameter $k$ and for every row $r$ of the post-softmax attention matrix $S$, wherein $n$ is the number of elements in every row of $S$;

   - computing (510) the calibrated element threshold *threshold*$_{OP_{l,k,r}}$ of the respective attention operator $OP_l$ in accordance with the list of recorded element thresholds *recorded_threshold*$_{OP_{l,k,r}}$ for the row r and the parameter $k$, wherein the parameter $k$ comprises the user-defined parameter $k$.

**10.** The method (1, 2) of any one of the claims 7 - 9,
computing (413, 510) the calibrated element threshold *threshold*$_{OP_{l,k,r}}$ of the respective attention operator $OP_l$ in accordance with the list of recorded element thresholds *recorded_threshold*$_{OP_{l,k,r}}$ for the respective row $r$ and the parameter $k$ comprising

   - computing (601) a threshold from the list of recorded element thresholds *recorded_threshold*$_{OP_{l,k,r}}$; and
   - setting (602) the computed threshold as the calibrated element threshold *threshold*$_{OP_{l,k,r}}$

**11.** The method (1, 2) of claim 10,
computing (601) a threshold from the list of recorded element thresholds *recorded_threshold*$_{OP_{l,k,r}}$ comprising one of

   - selecting (6011) a maximum threshold from the list of recorded element thresholds *recorded_threshold*$_{OP_{l,k,r}}$;
   - selecting (6012) an average threshold from the list of recorded element thresholds *recorded_threshold*$_{OP_{l,k,r}}$; and
   - selecting (6013) one of the thresholds from the list of recorded element thresholds *recorded_threshold*$_{OP_{l,k,r}}$ according to the parameter $k$ and the row $r$.

**12.** The method (1, 2) of claim 11,
selecting (6013) one of the thresholds from the list of recorded element thresholds *recorded_threshold*$_{OP_{l,k,r}}$ according to the parameter $k$ and the row $r$ comprising

   - computing (701) a numeric value *effective_k*$_t$ for each of the thresholds $t$ of the list of recorded element thresholds *recorded_threshold*$_{OP_{l,k,r}}$ comprising

      - computing (7011) a value *pass*$_{x,t}$ by filtering row r using the threshold $t$ and counting a number of elements that exceed the threshold, for every token sequence $x$ used in the creation of the list of recorded element thresholds *recorded_threshold*$_{OP_{l,k,r}}$;
      - computing (7012) the numeric value *effective_k*$_t$ for the threshold $t$ as an arithmetic average across all *pass*$_{x,t}$ values of all the token sequences $x$ used in the creation of the list of recorded element thresholds *recorded_threshold*$_{OP_{l,k,r}}$; and

   - selecting (702) one of the thresholds $t$ of the list of recorded element thresholds *recorded_threshold*$_{OP_{l,k,r}}$ which minimizes a difference between its respective *effective_k*$_t$ and the number $k$.

**13.** A computer program, comprising a program code for performing the method (1, 2) of any one of the claims 1 - 12 when executed on a computer.

**14.** A device (8), comprising

   a trained model (81) comprising topologically ordered attention operators $OP_{l \in \mathcal{L}}$; and
   a processor (82);
   the device (8) being configured to

      - receive (101) a set of calibration token sequences $x_c^{cal}$;

- receive (102) a set $K_{set}$ of calibration parameters $k_i$;

- offline-calibrate (103) a list of calibrated element thresholds $threshold_{OP_{l,k_i}}$ for the respective attention operator $OP_l$ of the model using the set of calibration token sequences $x_c^{cal}$, for each calibration parameter $k_i$ in the set $K_{set}$, the list of calibrated element thresholds $threshold_{OP_{l,k_i}}$ implementing a filtering of an attention matrix of the respective attention operator $OP_l$ to retain $k_i$ elements per attention row using a threshold comparison ;

- receive (104) an inference token sequence $x^{inf}$ and a user-defined parameter $k$ for the filtering;

- infer (105) from the respective attention operator $OP_l$ in accordance with the inference token sequence $x^{inf}$, the list of calibrated element thresholds $threshold_{OP_{l,k}}$ for the respective attention operator $OP_l$ and the user-defined parameter $k$; and

- output (106) an inference result and proceeding at receiving an inference token sequence.

15. The device (8) of claim 14,
being configured to perform the method (1) of any one of the claims 3 - 12.

16. A device (9), comprising

a trained model (91) comprising topologically ordered attention operators $OP_{l \in \mathcal{L}}$; and
a processor (92);
the device (9) being configured to

- reset (201) a calibration confidence;
- receive (202) an inference token sequence $x^{inf}$ and a user-defined parameter $k$ for the filtering;
- receive (203) a respective attention operator $OP_l$ of the model;
- compare (204) the calibration confidence with a minimum calibration confidence threshold;
- if the calibration confidence is higher than the minimum calibration confidence threshold,

- infer (205) from the respective attention operator $OP_l$ in accordance with the inference token sequence $x^{inf}$, the list of calibrated element thresholds $threshold_{OP_{l,k}}$ for the respective attention operator $OP_l$ and the user-defined parameter $k$; and
- if a number of kept elements of the $r^{th}$ row differs from the user-defined parameter $k$ by a minimum percentage, decrease (206) the calibration confidence;

- if the calibration confidence is lower than the minimum calibration confidence threshold and/or after every fixed number of inferences,

- infer (207) from the respective attention operator $OP_l$ in accordance with the inference token sequence $x^{inf}$;
- online-calibrate (208) a list of calibrated element thresholds $threshold_{OP_{l,k}}$ for the respective attention operator $OP_l$ using the inference token sequence $x^{inf}$; and
- increase (209) the calibration confidence;

- proceed (210) at receiving a respective attention operator, if available; and
- output (211) an inference result and proceed at receiving an inference token sequence.

17. The device (9) of claim 16,
being configured to perform the method (2) of any one of the claims 3 - 12.

1

| 101 |
|:---:|

| 102 |
|:---:|

| 103 |
|:---:|

| 104 |
|:---:|

| 105 |
|:---:|

| 106 |
|:---:|

FIG.1

*2*

```
          ┌──────────┐
          │   201    │
          └──────────┘
          ┌──────────┐
          │   202    │
          └──────────┘
          ┌──────────┐
          │   203    │
          └──────────┘
          ◇   204    ◇
     ┌──────────┐        ┌──────────┐
     │   205    │        │   207    │
     └──────────┘        └──────────┘
     ┌──────────┐        ┌──────────┐
     │   206    │        │   208    │
     └──────────┘        └──────────┘
                         ┌──────────┐
                         │   209    │
                         └──────────┘
          ◇   210    ◇
          ┌──────────┐
          │   211    │
          └──────────┘
```

FIG. 2

FIG. 3

FIG. 4

FIG. 5

208

```
┌─────────┐
│   501   │
└────┬────┘
     ▼
┌─────────┐
│   502   │
└────┬────┘
     ▼
┌─────────┐
│   503   │
└────┬────┘
     ▼
┌─────────┐
│   504   │
└────┬────┘
     ▼
┌─────────┐
│   505   │
└────┬────┘
     ▼
    ◇ 506 ◇
```

FIG. 6

FIG. 7

FIG. 8

8

```
┌─────────────────────────┐
│    ┌─────────────┐       │
│    │     81      │       │
│    └──────┬──────┘       │
│           │              │
│    ┌──────┴──────┐       │
│    │     82      │       │
│    └─────────────┘       │
└─────────────────────────┘
```

FIG. 9

9

```
┌─────────────────────────┐
│    ┌─────────────┐       │
│    │     91      │       │
│    └──────┬──────┘       │
│           │              │
│    ┌──────┴──────┐       │
│    │     92      │       │
│    └─────────────┘       │
└─────────────────────────┘
```

FIG. 10

| | Europäisches Patentamt European Patent Office Office européen des brevets | **EUROPEAN SEARCH REPORT** | **Application Number** EP 24 17 5999 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Kwon Woosuk ET AL: "A Fast Post-Training Pruning Framework for Transformers", , 17 October 2022 (2022-10-17), XP093230947, Retrieved from the Internet: URL:https://arxiv.org/pdf/2204.09656 [retrieved on 2024-12-04] * abstract * * sections 1, 3.1, 3.2, 4 * ----- | 1-15 | INV. G06N3/08 G06N3/082 |
| A | CHITTY-VENKATA KRISHNA TEJA ET AL: "A survey of techniques for optimizing transformer inference", JOURNAL OF SYSTEMS ARCHITECTURE, ELSEVIER BV, NL, vol. 144, 18 September 2023 (2023-09-18), XP087424782, ISSN: 1383-7621, DOI: 10.1016/J.SYSARC.2023.102990 [retrieved on 2023-09-18] * sections 2.1-2.3,5.1-5.7 * ----- | 1-15 | |
| | | | **TECHNICAL FIELDS SEARCHED (IPC)** G06N |

The present search report has been drawn up for all claims

| Place of search | Date of completion of the search | Examiner |
|---|---|---|
| The Hague | 19 December 2024 | Bercan, Radu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)